# EUROPÄISCHE PATENTSCHRIFT

(11) **EP 1 520 996 B1**
(45) Veröffentlichungstag und Bekanntmachung des Hinweises auf die Patenterteilung: **18.04.2007**
(21) Anmeldenummer: 04022116.0
(22) Anmeldetag: 17.09.2004
(51) Int. Cl.: F15B 15/12, F15B 15/24, F15B 15/22, F15B 15/28, F03C 4/00

(54) **Fluidbetätigter Drehantrieb**
Fluid-actuated rotary drive
Vérin rotatif actionné par fluide

(30) Priorität: 04.10.2003 DE 10346091
(43) Veröffentlichungstag der Anmeldung: 06.04.2005
(73) Patentinhaber: Festo AG & Co., 73734 Esslingen (DE)
(72) Erfinder: Feyrer, Thomas, 73732 Esslingen (DE)
(74) Vertreter: Abel, Martin

(56) Entgegenhaltungen:
- EP-A- 0 136 492
- BE-A- 652 317
- DE-A1- 3 941 255
- US-B2- 6 511 040

## Beschreibung

Die Erfindung betrifft einen fluidbetätigten Drehantrieb, mit einem Gehäuse, das einen Aufnahmeraum definiert, in dem ein durch Fluidbeaufschlagung um eine Drehachse verschwenkbarer Schwenkkolben angeordnet ist und das eine Haube und einen quer zur Drehachse an die Haubenöffnung angesetzten Deckel enthält, wobei die Haube an sich in Richtung der Drehachse gegenüberliegenden Wandabschnitten zwei miteinander fluchtende Haubendurchbrechungen aufweist, in deren Bereich der Schwenkkolben drehgelagert ist.

Drehantriebe dieser Art, die auch als Schwenkkolbenantriebe oder Schwenkflügelantriebe bezeichnet werden, werden in der Regel eingesetzt, um Komponenten eines Gerätes oder einer Maschine mit wechselnden Drehrichtungen zu verdrehen. Beispielsweise kann ein solcher Drehantrieb verwendet werden, um das Ventilglied eines Drehschieberventils zu positionieren.

Bei einem aus der EP 0 136 492 B1 bekannten fluidbetätigten Drehantrieb der eingangs genannten Art setzt sich das einen Schwenkkolben aufnehmende Gehäuse aus einer auch als Schale bezeichenbaren Haube und einem an die Haubenöffnung angesetzten Deckel zusammen. Die Haube ist an sich gegenüberliegenden Wandabschnitten mit zwei fluchtenden Haubendurchbrechungen versehen, die als Lagerstellen für die Schwenklagerung des Schwenkkolbens dienen. Die Haubendurchbrechungen sind von einer drehfest mit dem Schwenkkolben gekoppelten Abtriebswelle durchsetzt, die bei der durch Fluidbeaufschlagung hervorgerufenen Schwenkbewegung des Schwenkkolbens eine abgreifbare, hin und her gehende Drehbewegung ausführt. Die Befestigung zwischen der Haube und dem Deckel geschieht mittels eines um die Haube herumgeschlungenen Bandes, das mittels zweier Zuganker am Deckel befestigt wird.

Bei einem aus der DE 39 41 255 A1 bekannten Drehantrieb besteht das Gehäuse aus zwei scheibenförmigen Gehäusehälften, die in einer zur Drehachse rechtwinkeligen Fügeebene aneinandergesetzt sind. Die zur Schwenklagerung des Schwenkkolbens dienende Abtriebswelle ist hier in zentralen Durchbrechungen der beiden Gehäusehälften drehgelagert. Die beiden Gehäusehälften werden durch parallel zur Drehachse verlaufende Schrauben miteinander verspannt.

Ein aus der US 6,511,040 B2 bekannter Drehantrieb besitzt ein aus zwei Haubenelementen zusammengesetztes Gehäuse. Die Haubenelemente sind in einer längs der Drehachse verlaufenden Fügeebene zusammengesetzt. Die mit dem Schwenkkolben verbundene Abtriebswelle ist in Gehäusedurchbrechungen gelagert, die aus sich paarweise ergänzenden, an den beiden Haubenteilen ausgebildeten Durchbrechungshälften gebildet sind. Die beiden Haubenteile werden durch Schrauben aneinander befestigt.

Es ist die Aufgabe der vorliegenden Erfindung, einen fluidbetätigten Drehantrieb zu schaffen, der einen kostengünstigen Aufbau besitzt und sich einfach montieren lässt.

Zur Lösung dieser Aufgabe ist vorgesehen, dass der Deckel zwei in Richtung der Drehachse beabstandete Lagerabschnitte mit zwei sich fluchtend gegenüberliegenden Deckeldurchbrechungen aufweist, und dass der Deckel und die Haube quer zur Achsrichtung der Drehachse so ineinander gesteckt sind, dass die Haubendurchbrechungen und die Deckeldurchbrechungen unter Bildung zweier Durchbrechungspaare paarweise fluchtend übereinanderliegen, wobei in die Durchbrechungspaare jeweils ein in beide Durchbrechungen eingreifendes Zentrierstück eingesetzt ist, durch das der Deckel und die Haube zusammengehalten werden.

Auf diese Weise ist bei Bedarf eine schraubenlose Verbindung zwischen der Haube und dem Deckel des Gehäuses möglich. Haube und Deckel werden im Bereich der Haubenöffnung ineinander gesteckt, so dass die einander paarweise zugeordneten Deckeldurchbrechungen und Haubendurchbrechungen miteinander fluchten, wobei ein in die Durchbrechungspaare eingestecktes Zentrierstück für eine gegenseitige Fixierung und gleichzeitige Zentrierung sorgt. Somit kann der Montageaufwand bei gleichzeitig einfacher Herstellung der Gehäusekomponenten sehr gering gehalten werden, was eine kostengünstige Herstellung des Drehantriebes verspricht.

Vorteilhafte Weiterbildungen der Erfindung gehen aus den Unteransprüchen hervor.

Zur Ermöglichung eines Abgriffes einer Drehbewegung ist zweckmäßigerweise eine Abtriebswelle vorgesehen, deren Längsachse mit der Drehachse zusammenfällt und die mit dem Schwenkkolben drehfest verbunden ist, wobei sie über die beiden Zentrierstücke bezüglich dem Gehäuse verdrehbar gelagert ist. Die Abtriebswelle ist insbesondere zur Herstellung der drehfesten Verbindung durch den Schwenkkolben hindurch gesteckt. Gleichzeitig kann die Abtriebswelle auch die beiden Zentrierstücke koaxial durchsetzen. Bei der Montage des Drehantriebs kann daher so vorgegangen werden, dass man zunächst den Schwenkkolben in der in die andere Komponente eingreifenden Komponente von Haube und Deckel korrekt platziert, worauf man die beiden Komponenten zusammensteckt, um anschließend die Zentrierstücke einzusetzen und schließlich die Abtriebswelle durch die Zentrierstücke und den Schwenkkolben hindurch zu stecken. Zur axialen Fixierung der Abtriebswelle können übliche Sicherungsmittel verwendet werden, beispielsweise federnde Wellensicherungsringe.

Als vorteilhaft hat es sich erwiesen, die Zentrierstücke mehrteilig auszubilden. Sie können einen für die eigentliche Zentrierung verantwortlichen, passend in das jeweilige Durchbrechungspaar eingreifenden Außenring enthalten, sowie ein in den Außenring eingesetztes Innenteil, das die Abtriebswelle aufnimmt. Außenring und Innenteil können relativ zueinander verdrehbar sein, so dass der Außenring zur verschleißfreien Drehlagerung des Innenteils beiträgt. Der Außenring besteht zweckmäßigerweise aus Metall, insbesondere aus Stahl, während das Innenteil bevorzugt aus Kunststoffmaterial hergestellt ist.

Es ist von Vorteil, wenn die Abtriebswelle mit mindestens einem Zentrierstück drehfest verbunden ist. Bei einem einstükkigen Zentrierstück macht somit dieses Zentrierstück die Drehbewegung der Abtriebswelle insgesamt mit. Bei einer mehrteiligen Ausführungsform der vorgenannten Art wird die Drehbewegung der Abtriebswelle auf das Innenteil übertragen, das dann je nach Ausgestaltung allein oder zusammen mit dem Außenring verdreht wird.

An dem mit der Abtriebswelle mitdrehenden Bestandteil des Zentrierstückes kann außerhalb des Gehäuses ein radial abstehender Anschlagarm vorgesehen sein, der zu einer Drehwinkelvorgabeeinrichtung für die Abtriebswelle gehört. Diese Drehwinkelvorgabeeinrichtung kann bei Bedarf unter einer haubenartigen Abdeckung sitzen, die lösbar am Gehäuse angebracht ist und die zweckmäßigerweise transparent ist. An dieser Abdeckung können bei Bedarf Sensoren angebracht sein, um die Winkelposition des Anschlagarmes und somit die aktuelle Drehwinkelstellung der Abtriebswelle zu erfassen.

Bei einer bevorzugten Ausgestaltung besteht die Haube aus Kunststoffmaterial und der Deckel aus Metall. Eine solche Bauform ist vor allem dann von Vorteil, wenn die Haube in den Deckel eingesteckt und von diesem zumindest im Bereich der Deckeldurchbrechungen außen übergriffen wird. Auf diese Weise übernimmt der die Haube übergreifende Bestandteil des Deckels eine Abstützfunktion gegenüber dem von innen her auf die Haube einwirkenden Innendruck.

Bei einer besonders kostengünstigen und materialsparenden Bauform ist vorgesehen, dass sich die Haube und der Deckel lediglich mit die jeweilige Durchbrechung umgebenden ringförmigen Abschnitten überlappen. In den neben den ringförmigen Abschnitten liegenden Bereichen kann der Deckel dann insbesondere stumpf an der die Haubenöffnung umgebenden Randfläche der Haubenwand anliegen.

Die Haubendurchbrechungen und/oder die Deckeldurchbrechungen sind zweckmäßigerweise zumindest teilweise in sich überlappenden Fortsätzen der Haube bzw. des Deckels ausgebildet. Diese Fortsätze können ohrenartig abstehen.

Bevorzugt ist der Drehantrieb mit einem einstückigen, kombinierten Dichtungs- und Anschlagelement ausgestattet, das eine rahmenartig gestaltete, zwischen dem Deckel und der Haube angeordnete Gehäusedichtung, ein am Schwenkkolben anliegendes Dichtungselement und zwei in den Aufnahmeraum hineinragende Pufferelemente in integraler Bauweise beinhaltet. Man erreicht damit durch ein einziges Bauteil eine mehrfache Abdichtfunktion und eine den Endaufprall des Schwenkkolbens in den Endlagen minimierende Pufferung.

Nachfolgend wird die Erfindung anhand der beiliegenden Zeichnung näher erläutert. In dieser zeigen:

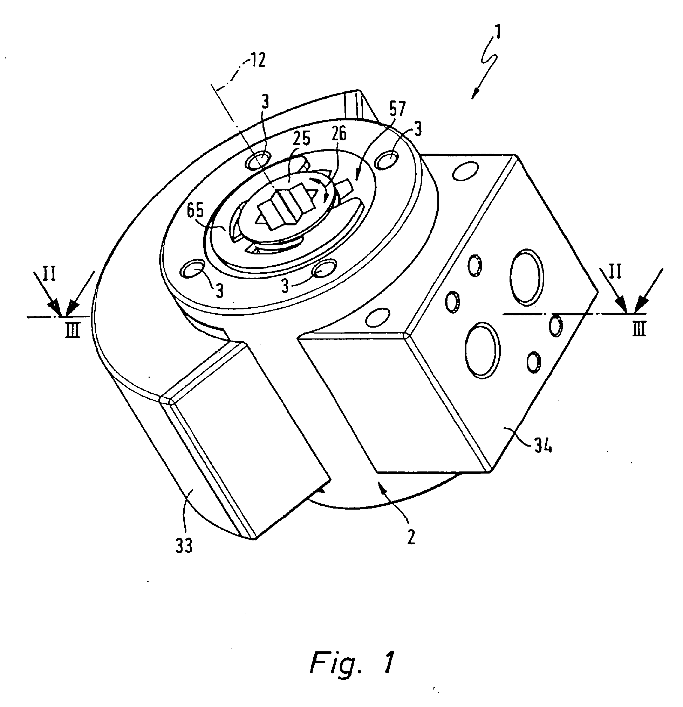

- Figur 1: eine perspektivische Darstellung einer bevorzugten Bauform des fluidbetätigten Drehantriebes,
- Figur 2: einen Schnitt durch den Drehantrieb aus Figur 1 in einer zur Drehachse rechtwinkeligen Schnittebene gemäß Schnittlinie II - II aus Figur 1,

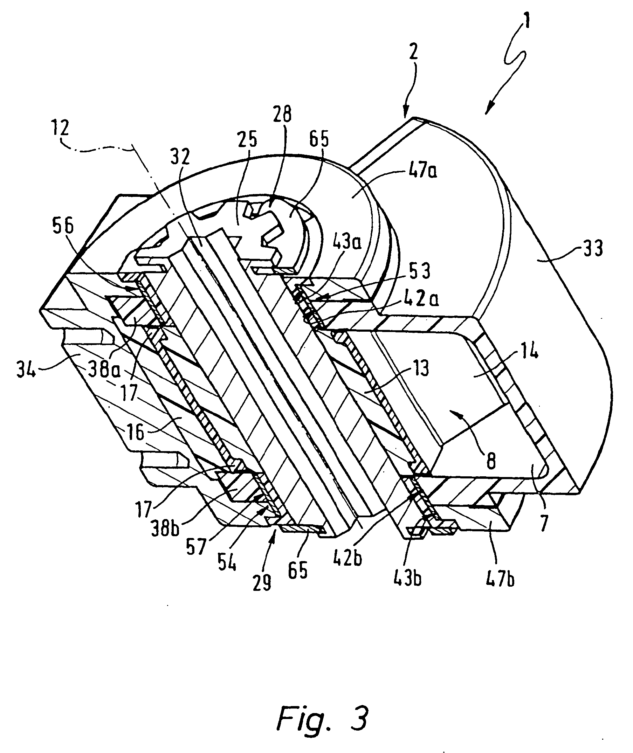

- Figur 3: einen Schnitt durch den Drehantrieb aus Figur 1 entlang einer die Drehachse enthaltenden Schnittebene gemäß Schnittlinie III - III aus Figur 1,
- Figur 4: ein bei dem Drehantrieb zum Einsatz kommendes kombiniertes Dichtungs- und Anschlagelement in Einzeldarstellung,
- Figur 5: den Drehantrieb der Figuren 1 bis 4 in einer Explosionsdarstellung mit zusätzlicher Illustration eines zu betätigenden Gerätes, hier in Gestalt eines Drehschieberventils,
- Figur 6: eine modifizierte Bauform des Drehantriebes in einer mit einer Drehwinkelvorgabeeinrichtung versehenen Ausstattungsvariante,
- Figur 7: den Drehantrieb aus Figur 6 im abgenommenen Zustand einer die Drehwinkelvorgabeeinrichtung schützenden haubenartigen Abdeckung, und
- Figur 8: eine Draufsicht auf den Drehantrieb aus Figur 1 unter Weglassung der Abdeckung.

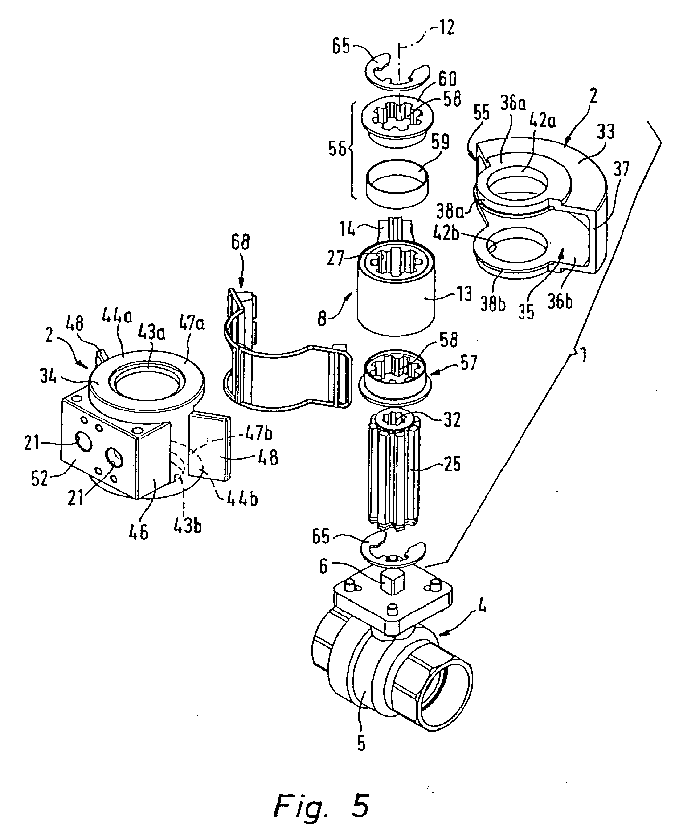

Der in seiner Gesamtheit mit Bezugsziffer 1 versehene fluidbetätigte Drehantrieb 1 verfügt über ein Gehäuse 2, an dem Befestigungsmittel 3 vorgesehen sind, die eine lösbare Befestigung an einem zu betätigenden Gerät 4 ermöglichen. In Figur 5 ist als zu betätigendes Gerät exemplarisch ein Drehschieberventil gezeigt, das über ein mit Bezug zum Ventilgehäuse 5 verdrehbares Ventilglied 6 verfügt, von dem in der Zeichnung lediglich ein Antriebsfortsatz ersichtlich ist. Der Drehantrieb 1 kann über sein Gehäuse 2 am Ventilgehäuse 5 befestigt werden und ermöglicht durch seine Betätigung ein Verdrehen des Ventilgliedes 6 in und entgegen dem Uhrzeigersinn.

Das Gehäuse 2 besitzt im Innern einen Aufnahmeraum 7, in dem ein Antriebselement in Gestalt eines Schwenkkolbens 8 untergebracht ist. Der Schwenkkolben 8 ist bezüglich einer Drehachse 12 verschwenkbar und verfügt über einen zur Drehachse 12 koaxialen buchsenartigen Lagerabschnitt 13, von dem radial ein Flügel 14 wegragt.

Die Mantelfläche 15 des Lagerabschnittes 13 steht mit einem gehäusefesten Dichtungselement 16 in Dichtkontakt. Stirnseitige, ringförmige Dichtungen 17 des Lagerabschnittes 13 stehen mit der Wandung des Aufnahmeraumes 7 in Dichtkontakt. Gleiches gilt für eine sich entlang des Randes des Flügels 14 erstreckende Flügeldichtung 18.

Die mit dem Dichtelement 16 in Dichtkontakt stehende Mantelfläche 15 kann wie abgebildet von einer am Außenumfang des Lagerabschnittes 13 angeordneten Beschichtung gebildet sein.

Durch die geschilderten Abdichtungsmaßnahmen wird der Aufnahmeraum 7 in zwei beidseits des Schwenkkolbens 8 liegende Arbeitskammern 22, 23 unterteilt. In jede Arbeitskammer 22, 23 mündet ein das Gehäuse 2 durchsetzender Fluidkanal 21, über den ein fluidisches Druckmedium, insbesondere Druckluft, nach Bedarf zugeführt oder abgeführt werden kann. Somit besteht die Möglichkeit, durch entsprechende fluidische Ansteuerung den Schwenkkolben 8 zu einer durch einen Doppelpfeil angedeuteten Schwenkbewegung 24 um die Drehachse 12 abwechselnd in und entgegen dem Uhrzeigersinn anzutreiben.

Die Schwenkbewegung des Schwenkkolbens 8 lässt sich außerhalb des Gehäuses 2 an einer Abtriebswelle 25 als hin- und hergehende Drehbewegung 26 abgreifen, die durch einen Doppelpfeil angedeutet ist. Diese Abtriebswelle 25 durchsetzt den Schwenkkolben 8 im Bereich des Lagerabschnittes 13, wobei die Längsachse der Abtriebswelle 25 mit der Drehachse 12 zusammenfällt. Indem der Lagerabschnitt 13 mit der Abtriebswelle 25 drehfest verbunden ist, ergibt sich eine schlupffreie Drehmomentübertragung.

Beim Ausführungsbeispiel verfügt der Lagerabschnitt 13 über eine koaxial durchgehende unkreisförmig profilierte Kolbendurchbrechung 27, durch die die außen komplementär konturierte Abtriebswelle 25 hindurch gesteckt ist, so dass sich in der Drehrichtung eine formschlüssige Verbindung ergibt. Beim Ausführungsbeispiel ist zu diesem Zweck eine Vielkeilprofilierung vorgesehen.

Die Abtriebswelle 25 durchsetzt axial beidseits des Schwenkkolbens 8 auch die Gehäusewandung, wobei die Durchdringungsbereiche als Drehlagerstellen 28, 29 für die Abtriebswelle 25 ausgebildet sind. Auf diese Weise ist die Abtriebswelle 25 mit Bezug zum Gehäuse 2 drehbar gelagert.

An der Abtriebswelle 25 vorgesehene Kupplungsmittel 32 ermöglichen eine drehfeste Verbindung mit dem zu verdrehenden Bauteil, vorliegend dem Ventilglied 6. Die Kupplungsmittel 32 bestehen beim Ausführungsbeispiel aus einem die Abtriebswelle 25 koaxial durchsetzenden, unkreisförmig profilierten Kanal. Dieser kann drehfest auf den Antriebsfortsatz des Ventilgliedes 6 aufgesteckt werden.

Das Gehäuse 2 ist zweiteilig ausgeführt. Es verfügt über eine Haube 33 und einen an der Haubenöffnung 35 an die Haube 33 angesetzten Deckel 34. Die Haubenöffnung 35 ist rechtwinkelig zur Drehachse 12 orientiert, so dass die Haube 33 und der Deckel 34 quer zur Achsrichtung der Drehachse 12 aneinandergesetzt sind, wobei der Deckel 34 die Haubenöffnung 35 verschließt. Haube 33 und Deckel 34 begrenzen dabei gemeinsam den Aufnahmeraum 7 für den Schwenkkolben 8.

Wie insbesondere auch aus Figur 5 ersichtlich ist, verfügt die Haube 33 über zwei sich in Richtung der Drehachse gegenüberliegende erste und zweite Wandabschnitte 36a, 36b, die durch einen peripheren dritten Wandabschnitt 37 miteinander verbunden sind. Der periphere Wandabschnitt hat einen kreisbogenförmigen Verlauf entsprechend der Richtung der Schwenkbewegung 24 des Schwenkkolbens 8. Das Krümmungszentrum des peripheren dritten Wandabschnittes 37 liegt auf der Drehachse 12.

Insgesamt definieren die drei Wandabschnitte 36a, 36b, 37 einen kreissegmentähnlichen Haubenabschnitt mit einer Winkelerstreckung, die beim Ausführungsbeispiel etwa im Bereich von 130° liegt.

Der erste und zweite Wandabschnitt 36a, 36b erstreckt sich jeweils in einer zur Drehachse 12 rechtwinkeligen Ebene. Der Abstand der zwei Wandabschnitte 36a, 36b entspricht der Höhe des Schwenkkolbens 8, so dass dieser unter Gewährleistung des oben geschilderten Dichtkontaktes über die Innenfläche der Wandabschnitte hinweg gleiten kann. Stirnseitig gleitet der Schwenkkolben 8 dabei an der Innenfläche des dritten Wandabschnittes 37 entlang.

An der den dritten Wandabschnitt 37 radial entgegengesetzten Innenseite des ersten und zweiten Wandabschnittes 36a, 36b ist jeweils ein ohrförmig abstehender Fortsatz 38a, 38b ausgebildet.

Der erste und zweite Wandabschnitt 36a, 36b ist jeweils mit einer Durchbrechung versehen, die als erste bzw. zweite Haubendurchbrechung 42a, 42b bezeichnet sei. Diese Haubendurchbrechungen 42a, 42b liegen einander fluchtend gegenüber, wobei ihre Zentren auf der Drehachse 12 liegen. Ein Teil ihres Querschnittes befindet sich im Fortsatz 38a, 38b des zugeordneten Wandabschnittes 36a, 36b. Sie sind jeweils kreisförmig gestaltet.

In ähnlicher Weise ist der Deckel 34 mit zwei miteinander fluchtenden Deckeldurchbrechungen 43a, 43b versehen, deren Zentren ebenfalls auf der Drehachse 12 liegen. Diese Deckeldurchbrechungen 43a, 43b sind an zwei in Richtung der Drehachse 12 zueinander beabstandeten Wandabschnitten des Deckels 34 vorgesehen, die als erste und zweite Lagerabschnitte 44a, 44b bezeichnet seien, weil sie an der Drehlagerung der Abtriebswelle 25 beteiligt sind. Die Lagerabschnitte 44a, 44b erstrecken sich jeweils rechtwinkelig zur Drehachse 12, wobei ihr Abstand voneinander dem außen gemessenen Abstand zwischen den beiden ersten und zweiten Wandabschnitten 36a, 36b der Haube 33 entspricht.

Der Deckel 34 verfügt an der der Haube 33 zugewandten Seite über eine Vertiefung 45. Deren Tiefe ist so gewählt, dass zwischen den beiden Deckeldurchbrechungen 43a, 43b ein freier Durchgang gewährleistet ist. Der Deckel 34 hat mithin einen von der Haube 33 abgewanden peripheren Wandabschnitt 46, an dem die beiden Lagerabschnitte 44a, 44b angeformt sind und der auch die Vertiefung 45 definiert. Die beiden Lagerabschnitte 44a, 44b sind teilweise in zur Haube 33 hin ragenden ohrenartigen Fortsätzen 47a, 47b des jeweiligen Lagerabschnittes 44a, 44b ausgebildet und haben einen kreisförmigen Querschnitt.

Der periphere Wandabschnitt 46 endet seitlich mit zwei flügelartig wegragenden Wandabschnitten 48, die sehr flach bauen. Im Zentrum des peripheren Wandabschnittes 46 ist ein von der Haube 33 wegragender Anschlussfortsatz 52 angeformt, in dem die beiden Fluidkanäle 21 ausgebildet sind.

Beim Zusammenbau des Drehantriebes 1 werden die Haube 33 und der Deckel 34 quer zur Achsrichtung der Drehachse 12 so ineinander gesteckt, dass die Haubendurchbrechungen 42a, 42b und die Deckeldurchbrechungen 43a, 43b unter Bildung zweier Durchbrechungspaare 53, 54 paarweise fluchtend in Achsrichtung der Drehachse 12 übereinander liegen. Beim Ausführungsbeispiel ist die Haube 33 in den Deckel 34 eingesteckt und wird von diesem im Bereich seiner Deckeldurchbrechungen 43a, 43b außen klammerartig übergriffen. Dabei überlappen sich die einander zugeordneten Fortsätze 38a, 47a; 38b, 47b.

Bedingt durch die besondere Formgebung der Haube 33 und des Deckels 34 ergibt sich beim Ausführungsbeispiel, dass sich die Haube 33 und der Deckel 34 im ineinander gesteckten Zustand lediglich mit die jeweilige Durchbrechung 42a, 42b; 43a, 43b umgebenden ringförmigen Abschnitten überlappen. Damit verbunden ist ein relativ geringer Materialbedarf für die Gehäusekomponenten.

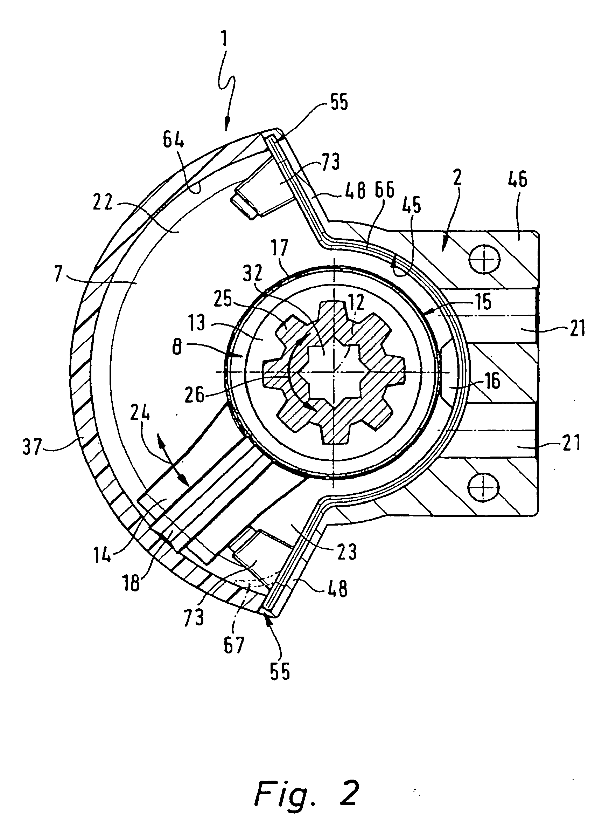

Wie aus Figur 2 ersichtlich ist, überlappen sich die Haube 33 und der Deckel 34 lediglich im Umfangsbereich der vorgenannten Durchbrechungen. In den daneben liegenden Bereichen hingegen sind die beiden Bauteile ohne gegenseitigen Eingriff flächig aneinander gesetzt. Konkret liegen dabei im Falle des Ausführungsbeispiels die beiden flügelartigen Wandabschnitte 48 an den beidseits der Fortsätze 38a, 38b vorgesehenen, die Haubenöffnung 35 umgrenzenden Randflächen 55 der Haubenwand an.

Der zusammengesteckte Zustand von Haube 33 und Deckel 34 wird durch zwei Zentrierstücke 56, 57 gesichert, von denen je eines in eines der Durchbrechungspaare 53, 54 eingesetzt ist. Die axialen Abmessungen der Zentrierstücke 56, 57 sind dabei so bemessen, dass sie jeweils in beide Durchbrechungen 42a, 43a; 42B, 43b eines jeweiligen Durchbrechungspaares 43, 54 eingreifen.

Durch diese Maßnahme sind Haube 33 und Deckel 34 quer zur Drehachse 12 unverrückbar miteinander verbunden. Gleichzeitig liegen diese beiden Komponenten im Umfangsbereich der Haubenöffnung 35 aneinander an. Die Zentrierstücke 56, 57 genügen daher, um die Haube 33 und den Deckel 34 fest miteinander zu verbinden. Zusätzliche Verbindungselemente, beispielsweise Schrauben, sind nicht erforderlich. Der Zusammenbau gestaltet sich daher äußerst einfach.

Die beiden Durchbrechungspaare 33, 54 definieren jeweils eine der oben erwähnten beiden Drehlagerstellen 28, 29 für die Abtriebswelle 25. In diesem Zusammenhang ist zweckmäßigerweise vorgesehen, dass die Abtriebswelle 25 über die beiden Zentrierstücke 56, 57 am Gehäuse 2 verdrehbar gelagert ist.

Die beiden Zentrierstücke 56, 57 sind ringförmig ausgebildet und besitzen jeweils eine axiale Durchbrechung 58, in die die Abtriebswelle 25 mit axial beidseits des Schwenkkolbens 8 liegenden Längenabschnitten eingreift. Bevorzugt sind die Durchbrechungen 58 so profiliert, dass eine drehfeste Verbindung zwischen dem jeweiligen Zentrierstück 56, 57 und der durch dieses hindurch greifenden Abtriebswelle 25 vorliegt.

Beim Ausführungsbeispiel sind die Zentrierstücke 56, 57 jeweils zweiteilig ausgebildet. Sie besitzen einen insbesondere aus Metall, beispielsweise Stahl, bestehenden Außenring 59, dessen Außendurchmesser dem Innendurchmesser der Durchbrechungen 42a, 42b, 43a, 43b entspricht. Dieser ist maßgeblich für die gegenseitige Zentrierung von Haube 33 und Deckel 34 sowie für den Zusammenhalt zwischen diesen beiden Komponenten verantwortlich. Er ist vorzugsweise hülsenähnlich gestaltet und relativ dünnwandig ausgebildet.

Als zweites Teil der Zentrierstücke 56, 57.ist ein ringförmiges Innenteil 60 vorgesehen, das konzentrisch in den Außenring 59 eingesteckt ist. Dabei kann eine relative Verdrehbarkeit zwischen dem Außenring 59 und dem Innenteil 60 vorliegen.

Das Innenteil 60 verfügt über die Durchbrechung 58, so dass es mit der Abtriebswelle 25 in Drehrichtung bewegungsgekoppelt ist. Bevorzugt besteht das Innenteil 60 aus Kunststoffmaterial.

Bei der Drehbewegung der Abtriebswelle 25 kann das Innenteil 60 im Außenring 59 gleiten. Dadurch wird ein verschleißfördernder unmittelbarer Kontakt zwischen der sich drehenden Komponente des Zentrierstückes 56, 57 und der Gehäusewandung vermieden.

Aus Kostengründen wäre es anzustreben, sowohl die Haube 33 als auch den Deckel 34 aus einfach zu formendem Kunststoffmaterial herzustellen. Da die Arbeitskammern 22, 23 im Betrieb des Drehantriebes 1 jedoch mit Innendruck beaufschlagt werden, besteht das Problem der Gewährleistung einer ausreichenden Festigkeit. Beim Ausführungsbeispiel besteht daher der Deckel 34 aus Metall, beispielsweise aus Aluminium oder aus Stahl, so dass er, da er die Haube 33 außen partiell übergreift, als Abstützung für die Haubenwandung fungiert, die somit auch einem hohen Innendruck standhalten kann.

Bei der Montage des Drehantriebes 1 wird zweckmäßigerweise so vorgegangen, dass zunächst der Schwenkkolben 8 durch die Haubenöffnung 35 hindurch so in den Innenraum der Haube 33 eingeschoben wird, dass seine Kolbendurchbrechung 27 mit den beiden Haubendurchbrechungen 42a, 42b fluchtet. Der Flügel 14 ragt dabei in einen von der Haube 33 definierten kreissegmentartigen Abschnitt 64 des Aufnahmeraumes 7 hinein. Der Lagerabschnitt 13 sitzt zwischen den beiden Fortsätzen 38a, 38b, wobei aufgrund der zwischen der Haubenwandung und den Dichtungen des Schwenkkolbens 8 vorhandenen Reibung eine lokale Fixierung des Schwenkkolbens 8 erreicht wird.

Anschließend werden die Haube 33 und der Deckel 34 ineinander gesteckt, bis sie mit ihren Wandungen aneinander anliegen, was zur Folge hat, dass dann die einzelnen Durchbrechungen 42a, 42b, 43a, 43b miteinander fluchten.

Als nächstes werden die beiden Zentrierstücke 56, 57 in die Durchbrechungspaare 53, 54 eingesteckt, so dass die Relativlage von Haube 33 und Deckel 34 gesichert ist. Dabei können der Außenring 59 und das Innenteil 60 jeweils nacheinander oder gemeinsam, nach vorheriger Montage des Außenringes 59 auf dem Innenteil 60, eingesetzt werden.

Im nächsten Schritt wird die Abtriebswelle 25 von einer Axialseite her durch zunächst das dort platzierte Zentrierstück 56, anschließend die Kolbendurchbrechung 57 und dann das auf der entgegengesetzten Seite liegende Zentrierstück 57 hindurch gesteckt.

Schließlich werden noch an den außerhalb des Gehäuses 2 liegenden Wellenabschnitten der Abtriebswelle 25 Sicherungselemente 65 fixiert, die die Axiallage der Abtriebswelle 25 relativ zum Gehäuse 2 sichern. Beim Ausführungsbeispiel sind die Sicherungselemente 65 von federnden Sprengringen gebildet, die auf die Abtriebswelle 25 aufgesteckt werden. Die Sicherungselemente 65 flankieren axial die Zentrierstücke 56, 57 und halten diese an Ort und Stelle axial fest.

Bei Bedarf kann die Abtriebswelle 25 auch schon vor der Montage der Zentrierstücke 56, 57 durch die Durchbrechungspaare 53, 54 und die Kolbendurchbrechung 27 hindurch gesteckt werden.

Weitere Befestigungsmaßnahmen sind für den Zusammenbau des Drehantriebes 1 insoweit nicht erforderlich.

Wie aus Figur 2 hervorgeht, taucht der Schwenkkolben 8 mit seinem Lagerabschnitt 13 partiell in die Vertiefung 45 des Deckels 34 ein.

Der Fügebereich zwischen der Haube 33 und dem Deckel 34 ist durch eine schnurartige Gehäusedichtung 66 abgedichtet, die dem Längsverlauf des die Haubenöffnung 35 begrenzenden Randbereiches der Haubenwand folgt. Die Gehäusedichtung 66 liegt insbesondere an der Randfläche 55 an. Beim Einsetzen der Zentrierstücke 56, 57 wird die Gehäusedichtung 66 zwischen der Haube 33 und dem Deckel 34 gepresst, so dass die gewünschte Abdichtung erzielt wird.

Alternativ oder zusätzlich kann die Gehäusedichtung 66 eine in Figur 2 schematisch angedeutete Dichtlippe 67 aufweisen, die an der Innenfläche des in der Haube 33 ausgebildeten Abschnittes des Aufnahmeraumes 7 dichtend zur Anlage kommt.

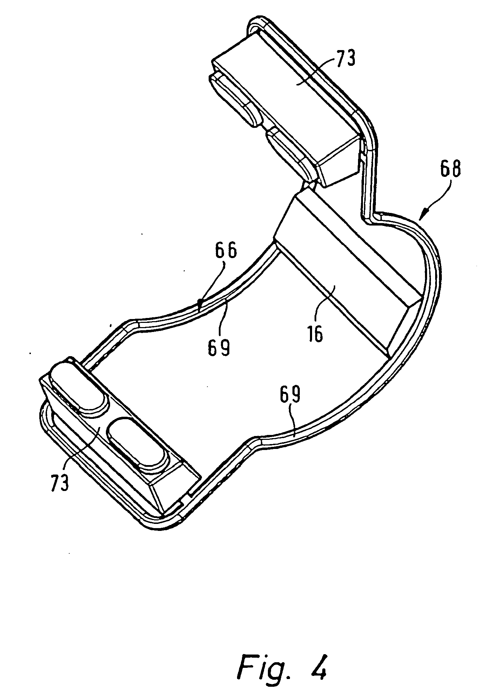

Beim Ausführungsbeispiel ist die Gehäusedichtung 66 Bestandteil eines in Figur 4 gesondert gezeigten einstückigen kombinierten Dichtungs- und Anschlagelementes 68. Ersichtlich hat die Gehäusedichtung 66 eine rahmenförmige Gestalt. In einem mittleren Bereich erstreckt sich zwischen zwei beabstandeten Strangabschnitten 69 der Gehäusedichtung 66 das einstückig mit diesen ausgebildete, oben schon erwähnte Dichtungselement 16. An den schmalseitigen Endbereichen der Gehäusedichtung 66 ist jeweils ein Pufferelement 73 einstückig angeformt, das im installierten Zustand des Dichtungs- und Anschlagelementes 68 jeweils stirnseitig in den kreissegmentartigen Abschnitt 64 des Aufnahmeraumes 7 hinein und somit dem Flügel 14 des Schwenkkolbens 8 entgegenragt.

Das jeweilige Pufferelement 73 kann sich rückseitig an dem flügelartigen Wandabschnitt 48 des Deckels 34 abstützen.

Wenn im Betrieb des Drehantriebes 1 der Schwenkkolben 8 in seine Endlage fährt, prallt er mit seinem Flügel 14 auf das zugeordnete Pufferelement 73 auf und wird somit verhältnismäßig sanft abgebremst.

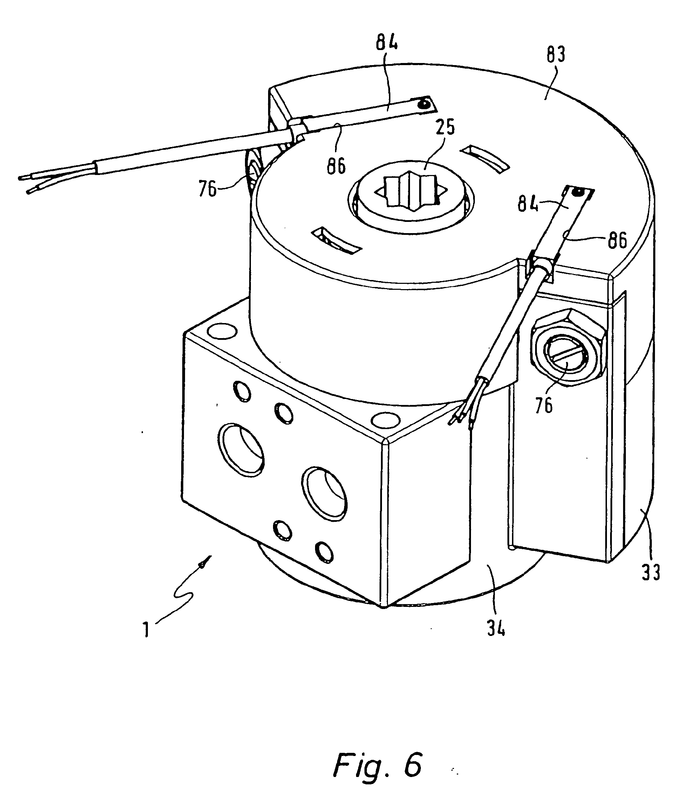

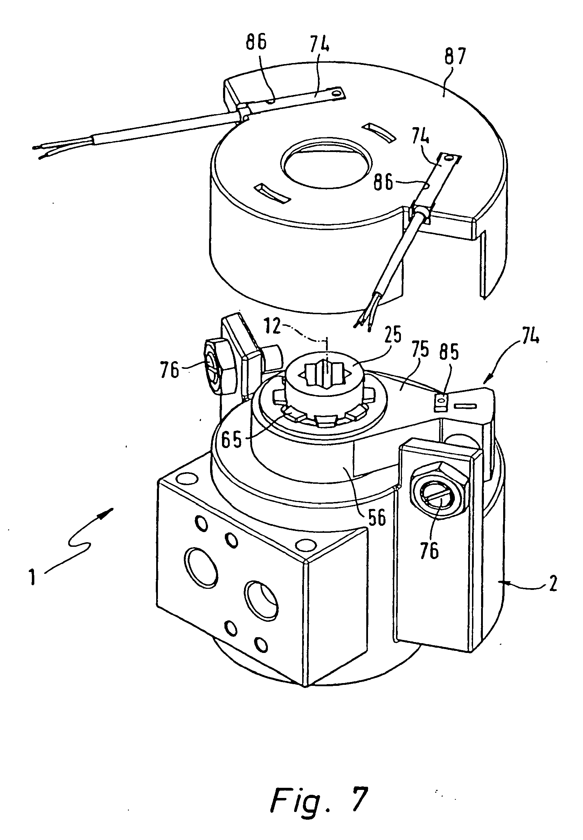

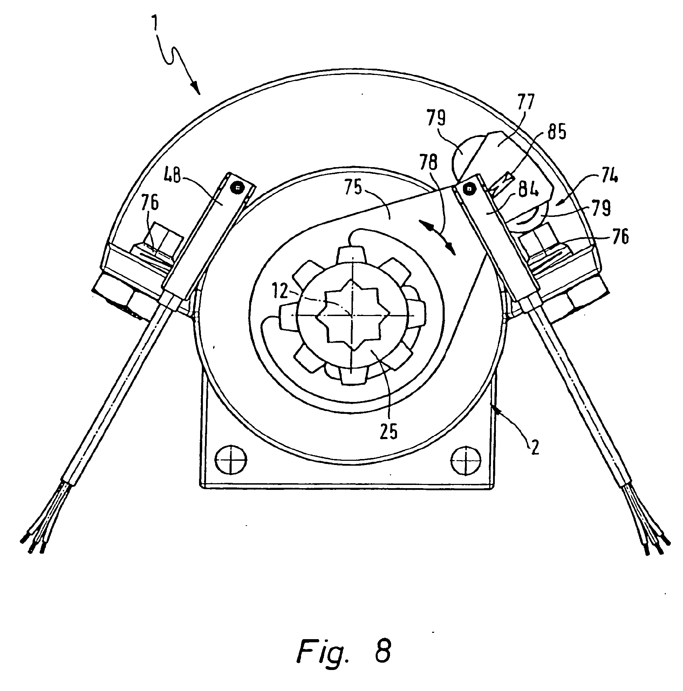

Es besteht die Möglichkeit, den Drehantrieb 1 mit einer aus Figuren 6 bis 8 näher hervorgehenden Drehwinkelvorgabeeinrichtung 74 für die Abtriebswelle 25 auszustatten. In diesem Falle befindet sich in axialer Verlängerung des Gehäuses 2 außerhalb diesem ein bezüglich der Drehachse 12 radial abstehender Anschlagarm 75, der mit der Abtriebswelle drehfest gekoppelt ist. Es kann sich bei dem Anschlagarm 75 um ein gesondertes Bauteil handeln, das axial im Anschluss auf ein Zentrierstück drehfest auf die Abtriebswelle 25 aufgesteckt wird. Vorgezogen wird jedoch die beim Ausführungsbeispiel realisierte Bauform, bei der der Anschlagarm 75 fest und insbesondere einstückig mit dem mit der Abtriebswelle 25 drehfest verbundenen Bestandteil eines der Zentrierstücke 56 verbunden ist. Beim Ausführungsbeispiel ist der Anschlagarm 75 einstückig mit einem der Innenteile 60 verbunden.

Die Drehwinkelvorgabeeinrichtung 74 besitzt zwei im Schwenkweg des Anschlagarmes 75 angeordnete Anschlagelemente 76, die dem Endabschnitt 77 des Anschlagarmes 75 entgegenragen. Im Betrieb des Drehantriebes 1 macht der Anschlagarm 75 die Drehbewegung der Abtriebswelle 25 mit und wird vergleichbar dem Schwenkkolben 8 um die Drehachse 12 verschwenkt, wobei die Schwenkbewegung durch einen Doppelpfeil bei 78 angedeutet ist.

Indem der Anschlagarm 75 auf die Anschlagelemente 76 aufläuft, wird sein Schwenkwinkel und mithin auch der Drehwinkel der Abtriebswelle 25 begrenzt. Somit kann vom Anwender nach Bedarf von außen her eine an den Anwendungsfall angepasste Drehwinkelbegrenzung vorgenommen werden. In diesem Zusammenhang ist von Vorteil, wenn die Anschlagelemente 76 in der Schwenkrichtung des Anschlagarmes 75 verstellbar und positionierbar sind, um in einem gewissen Bereich eine variable Justierung vornehmen zu können.

Speziell wenn der Anschlagarm 75 einstückig mit einem Zentrierstück 56 ausgeführt ist, besteht er vorzugsweise aus Kunststoffmaterial. Um dennoch die erforderliche Verschleißfestigkeit beim Zusammenwirken mit den Anschlagelementen 76 zu gewährleisten, sind in den Endabschnitt 77 des Anschlagarms 75 aus Stahl oder aus einem sonstigen verschleißfesten Metall bestehende, bevorzugt kugelartige Aufprallelemente 79 eingesetzt, die mit den Anschlagelementen 76 zusammenarbeiten.

Durch eine an das Gehäuse 2 angesetzte, die Drehwinkelvorgabeeinrichtung 74 umschließende haubenartige Abdeckung 83 werden die Komponenten der Drehwinkelvorgabeeinrichtung 74 vor Verschmutzung geschützt und wird Verletzungen von Personen vorgebeugt.

Die Abdeckung 83 besteht zweckmäßigerweise aus einem transparenten Kunststoffmaterial, so dass von außen her jederzeit bequem eine Funktionsüberwachung möglich ist.

Es ist des weiteren von Vorteil, wenn die Drehwinkelvorgabeeinrichtung 74 mit Mitteln ausgestattet ist, die die Erfassung mindestens einer Drehwinkelposition der Abtriebswelle 25 ermöglichen und die insbesondere geeignet sind, um die beiden Endlagen der Abtriebswelle 25 zu erfassen.

Derartige, beim Ausführungsbeispiel vorhandene Mittel enthalten zwei im Bereich der Anschlagelemente 76 gehäusefest fixierte Sensoren 84, die auf einen am Anschlagarm 75 angeordneten Permanentmagnet 85 ansprechen. Zweckmäßigerweise sind die Sensoren 74 in Verankerungsnuten 86 befestigt, die an der Abdeckung 83 ausgebildet sind und die sich insbesondere an der sich rechtwinkelig zur Drehachse 12 erstreckenden Abdeckwand 87 der Abdeckung 83 befinden.

## Patentansprüche

1. Fluidbetätigter Drehantrieb, mit einem Gehäuse (2), das einen Aufnahmeraum (7) definiert, in dem ein durch Fluidbeaufschlagung um eine Drehachse (12) verschwenkbarer Schwenkkolben (8) angeordnet ist und das eine Haube (33) und einen quer zur Drehachse (12) an die Haubenöffnung (35) angesetzten Deckel (34) enthält, wobei die Haube (33) an sich in Richtung der Drehachse (12) gegenüberliegenden Wandabschnitten (36,a, 36b) zwei miteinander fluchtende Haubendurchbrechungen (42a, 42b) aufweist, in deren Bereich der Schwenkkolben (8) drehgelagert ist, **dadurch gekennzeichnet, dass** der Deckel (34) zwei in Richtung der Drehachse (12) beabstandete Lagerabschnitte (44a, 44b) mit zwei sich fluchtend gegenüberliegenden Deckeldurchbrechungen (43a, 43b) aufweist, und dass der Deckel (34) und die Haube (33) quer zur Achsrichtung der Drehachse (12) so ineinander gesteckt sind, dass die Haubendurchbrechungen (42a, 42b) und die Deckeldurchbrechungen (43a, 43b) unter Bildung zweier Durchbrechungspaare (53, 54) paarweise fluchtend übereinander liegen, wobei in die Durchbrechungspaare (53, 54) jeweils ein in beide Durchbrechungen (42a, 43a; 42b, 43b) eingreifendes zentrierstück (56, 57) eingesetzt ist, durch das der Deckel (34) und die Haube 833) zusammengehalten werden.

2. Drehantrieb nach Anspruch 1, **gekennzeichnet durch** eine sich längs der Drehachse (12) erstreckende Abtriebswelle (25), die mit dem Schwenkkolben (8) drehfest verbunden ist und die über die beiden Zentrierstücke (56, 57) bezüglich dem Gehäuse (2) verdrehbar gelagert ist.

3. Drehantrieb nach Anspruch 2, **dadurch gekennzeichnet, dass** die Abtriebswelle (25) durch den Schwenkkolben (8) drehfest hindurch gesteckt ist.

4. Drehantrieb nach Anspruch 2 oder 3, **dadurch gekennzeichnet, dass** die Abtriebswelle (25) durch die beiden Zentrierstücke (56, 57) koaxial hindurch gesteckt ist.

5. Drehantrieb nach einem der Ansprüche 2 bis 4, **dadurch gekennzeichnet, dass** die Zentrierstücke (56, 57) ringförmig ausgebildet sind.

6. Drehantrieb nach einem der Ansprüche 1 bis 5, **dadurch gekennzeichnet, dass** die Zentrierstücke (56, 57) einen passend in das jeweilige Durchbrechungspaar (53, 54) eingreifenden Außenring (59) und ein in den Außenring (59) eingesetztes, zur Lagerung der Abtriebswelle (25) dienendes Innenteil (60) aufweisen.

7. Drehantrieb nach Anspruch 6, **dadurch gekennzeichnet, dass** der Außenring (59) aus Metall und das Innenteil (60) aus Kunststoffmaterial besteht.

8. Drehantrieb nach einem der Ansprüche 2 bis 7, **dadurch gekennzeichnet, dass** die Abtriebswelle (25) mit mindestens einem Zentrierstück (56) drehfest verbunden ist, so dass das gesamte oder ein Bestandteil des Zentrierstückes (56) die Drehbewegung der Abtriebswelle (25) mitmacht.

9. Drehantrieb nach Anspruch 8, **dadurch gekennzeichnet, dass** an dem mit der Abtriebswelle (25) drehfest verbundenen Bestandteil des Zentrierstückes (56) ein außerhalb des Aufnahmeraumes (7) radial abstehender Anschlagarm (75) vorgesehen ist, der zu einer Drehwinkelvorgabeeinrichtung (74) für die Abtriebswelle (25) gehört.

10. Drehantrieb nach einem der Ansprüche 1 bis 9, **dadurch gekennzeichnet, dass** die Haube (33) aus Kunststoffmaterial und der Deckel (34) aus Metall bestehen.

11. Drehantrieb nach Anspruch 10, **dadurch gekennzeichnet, dass** die Haube (33) in den Deckel (34) eingesteckt und von diesem zumindest im Bereich der Deckeldurchbrechungen (43a, 43b) außen klammerartig übergriffen wird.

12. Drehantrieb nach einem der Ansprüche 1 bis 11, **dadurch gekennzeichnet, dass** sich die Haube (33) und der Deckel (34) lediglich mit die jeweilige Durchbrechung (42a, 42b; 43a, 43b) umgebenden ringförmigen Abschnitten überlappen.

13. Drehantrieb nach Anspruch 12, **dadurch gekennzeichnet, dass** der Deckel (34) in den neben den ringförmigen Abschnitten liegenden Bereichen an die die Haubenöffnung (35) umgrenzende Randfläche (55) der Haubenwand angesetzt ist.

14. Drehantrieb nach einem der Ansprüche 1 bis 13, **dadurch gekennzeichnet, dass** die Haubendurchbrechungen (42a, 42b) und/oder die Deckeldurchbrechungen (43a, 43b) zumindest teilweise in sich überlappenden Fortsätzen (38a, 38b; 47a, 47b) der Haube (33) bzw. des Deckels (34) ausgebildet sind.

15. Drehantrieb nach einem der Ansprüche 1 bis 14, **dadurch gekennzeichnet, dass** der Deckel (34) an der der Haube (33) zugewandten Seite eine Vertiefung (45) aufweist, in die der Schwenkkolben (8) mit einem buchsenartigen Lagerabschnitt (13) eintaucht.

16. Drehantrieb nach einem der Ansprüche 1 bis 15, **gekennzeichnet durch** ein einstückiges kombiniertes Dichtungs- und Anschlagelement (68) mit einer rahmenartig gestalteten, zwischen dem Deckel (34) und der Haube (33) angeordneten Gehäusedichtung (66), einem am Schwenkkolben (8) anliegenden Dichtungselement (16) und zwei in den Aufnahmeraum (7) hineinragenden Pufferelementen (73) zur Aufpralldämpfung des Schwenkkolbens (8).

17. Drehantrieb nach einem der Ansprüche 1 bis 16, **dadurch gekennzeichnet, dass** in axialer Verlängerung des Gehäuses (2) außerhalb diesem eine Drehwinkelvorgabeeinrichtung (74) für die Abtriebswelle (25) vorgesehen ist, die einen drehfest mit der Abtriebswelle (25) verbundenen Anschlagarm (75) und zwei im Schwenkweg des Anschlagarmes (75) angeordnete gehäusefeste Anschlagelemente (76) enthält.

18. Drehantrieb nach Anspruch 17, **dadurch gekennzeichnet, dass** der Anschlagarm (75) aus Kunststoffmaterial besteht, in das aus Metall bestehende Aufprallelemente (79) eingesetzt sind, die mit den gehäusefesten Anschlagelementen (76) zusammenarbeiten.

19. Drehantrieb nach Anspruch 17 oder 18, **gekennzeichnet durch** eine am Gehäuse (2) fixierte, vorzugsweise aus transparentem Material bestehende haubenartige Abdeckung (83) für die Drehwinkelvorgabeeinrichtung (74).

20. Drehantrieb nach Anspruch 19, **dadurch gekennzeichnet, dass** die Abdeckung (83) mit Befestigungsnuten (86) zur Verankerung von Sensoren (84) ausgestattet ist, die zur Erfassung mindestens einer Drehwinkelposition der Abtriebswelle (25) dienen.

21. Drehantrieb nach einem der Ansprüche 1 bis 20, **dadurch gekennzeichnet, dass** der Schwenkkolben (8) einen buchsenartigen Lagerabschnitt (13) und einen radial von dem Lagerabschnitt (13) wegragenden Flügel (14) aufweist, wobei der Flügel (14) in einem von der Haube (33) definierten kreissegmentartigen Abschnitt (64) des Aufnahmeraumes (7) angeordnet ist.

## Claims

1. Fluid-operated rotary actuator with a housing (2) defining a location chamber (7), wherein a pivoting piston (8) pivotable about an axis of rotation (12) under fluid pressure is located, and which comprises a hood (33) and a cover (34) fitted to the hood opening (35) at right angles to the axis of rotation (12), wherein the hood (33) is provided with two mutually aligned hood apertures (42a, 42b) in wall sections (36a, 36b) located opposite one another in the direction of the axis of rotation (12), in the region of which the pivoting piston (8) is rotatably mounted, **characterised in that** the cover (34) features two bearing sections (44a, 44b) arranged at a distance from one another in the direction of the axis of rotation (12) and comprising two cover apertures (43a, 43b) arranged in alignment opposite one another, and **in that** the cover (34) and the hood (33) are, at right angles to the direction of the axis of rotation (12), inserted into one another such that the hood apertures (42a, 42b) and the cover apertures (43a, 43b) are placed opposite one another in pairs to form two pairs of apertures (53, 54), wherein a centring element (56, 57) engaging two apertures (42a, 43a; 42b, 43b) is installed in each of the pairs of apertures (53, 54) to hold together the cover (34) and the hood (33).

2. Rotary actuator according to claim 1, **characterised by** a drive shaft (25) extending along the axis of rotation (12), which is non-rotatably joined to the pivoting piston (8) and mounted for rotation relative to the housing (2) by way of the two centring elements (56, 57).

3. Rotary actuator according to claim 2, **characterised in that** the drive shaft (25) is non-rotatably passed through the pivoting piston (8)

4. Rotary actuator according to claim 2 or 3, **characterised in that** the drive shaft (25) is coaxially passed through the two centring elements (56, 57)

5. Rotary actuator according to any of claims 2 to 4, **characterised in that** the centring elements (56, 57) are annular in design.

6. Rotary actuator according to any of claims 2 to 5, **characterised in that** the centring elements (56, 57) comprise an outer ring (59) in engagement with the associated pair of apertures (53, 54) and an inner part (60) inserted into the outer ring (59) as a bearing for the drive shaft (25).

7. Rotary actuator according to claim 6, **characterised in that** the outer ring (59) is made of metal and the inner part (60) is made of a plastic material.

8. Rotary actuator according to any of claims 2 to 7, **characterised in that** the drive shaft (25) is non-rotatably connected to at least one centring element (56), so that the whole or a part of the centring element (56) follows the rotary movement of the drive shaft (25).

9. Rotary actuator according to claim 8, **characterised in that** a stop arm (75) radially projecting outside the location chamber (7) and forming part of a rotary angle presetting device (74) for the drive shaft (25) is provided on the part of the centring element (56) which is non-rotatably connected to the drive shaft (25).

10. Rotary actuator according to any of claims 1 to 9, **characterised in that** the hood (33) is made of a plastic material and the cover (34) is made of metal.

11. Rotary actuator according to claim 10, **characterised in that** the hood (33) is inserted into the cover (34) and encompassed by the latter in the manner of a clamp at least in the region of the cover apertures (43a, 43b).

12. Rotary actuator according to any of claims 1 to 11, **characterised in that** the hood (33) and the cover (34) overlap only with the annular sections surrounding the relevant aperture (42a, 42b; 43a, 43b).

13. Rotary actuator according to claim 12, **characterised in that** the cover (34) is fitted to the peripheral surface (55) of the hood wall bounding the hood opening (35) in the regions adjacent to the annular sections.

14. Rotary actuator according to any of claims 1 to 13, **characterised in that** the hood apertures (42a, 42b) and the cover apertures (43a, 43b) are at least partially formed in overlapping extensions (38a, 38b; 47a, 47b) of the hood (33) or the cover (34) respectively.

15. Rotary actuator according to any of claims 1 to 14, **characterised in that** the cover (34) has a recess (45) on the side facing the hood (33), into which the pivoting piston (8) dips with a bush-type bearing section (13).

16. Rotary actuator according to any of claims 1 to 15, **characterised by** a sealing and stop element (68) combined into a single piece, with a housing seal (66) designed like a frame and located between the hood (33) and the cover (34), with a sealing element (16) bearing against the pivoting piston (8), and with two puffer elements (73) projecting into the location chamber (7) for damping the impact of the pivoting piston (8).

17. Rotary actuator according to any of claims 1 to 16, **characterised in that** a rotary angle presetting device (74) for the drive shaft (25) is provided in axial extension of the housing (2) outside thereof, comprising a stop arm (75) non-rotatably connected to the drive shaft (25) and two stop elements (76) located on the housing in the path of the stop arm (75).

18. Rotary actuator according to claim 17, **characterised in that** the stop arm (75) is made of a plastic material into which impact elements (79) made of metal are installed to act together with the stop elements (76) located on the housing.

19. Rotary actuator according to claim 17 or 18, **characterised by** a hood-like cover (83) for the rotary angle presetting device (74), which is located on the housing (2) and preferably made of a transparent material.

20. Rotary actuator according to claim 19, **characterised in that** the cover (83) is equipped with mounting grooves (86) for the anchorage of sensors (84) used for detecting at least one rotary angle position of the drive shaft (25).

21. Rotary actuator according to any of claims 1 to 20, **characterised in that** the pivoting piston (8) has a bush-type bearing section (13) and a wing (14) radially projecting from the bearing section (13), the wing (14) being located in a circular section part (64) of the location chamber (7) defined by the hood (33).

## Revendications

1. Système d'entraînement rotatif actionné par fluide, comportant un boîtier (2), qui définit un logement (7), dans lequel est disposé un piston rotatif (8) apte à pivoter autour d'un axe de rotation (12) sous l'effet de la sollicitation d'un fluide, et qui comporte une calotte (33) et un couvercle (34) posé perpendiculairement à l'axe de rotation (12) sur l'ouverture de calotte (35), la calotte (33) comportant deux passages de calotte (42a, 42b), qui sont alignés l'un avec l'autre dans des parties de paroi (36a, 36b) opposées l'une à l'autre dans la direction de l'axe de rotation (12) et dans la zone desquels est monté tournant le piston rotatif (8), **caractérisé en ce que** le couvercle (34) comporte deux parties de palier (44a, 44b), situées à distance l'une de l'autre dans la direction de l'axe de rotation (12) et munies de deux passages de couvercle (43a, 43b) alignés face à face, et **en ce que** le couvercle (34) et la calotte (33) sont emboîtés l'un dans l'autre perpendiculairement à la direction de l'axe de rotation (12), de telle sorte que les passages de calotte (42a, 42b) et les passages de couvercle (43a, 43b) sont superposés et alignés par paires en formant deux paires de passages (53, 54), dans chaque paire de passages (53, 54) étant insérée une pièce de centrage (56, 57), qui s'engage dans les deux passages (42a, 43a ; 42b, 43b) et par laquelle le couvercle (34) et la calotte (33) sont maintenus ensemble.

2. Système d'entraînement rotatif selon la revendication 1, **caractérisé par** un arbre de sortie (25) orienté dans le sens longitudinal de l'axe de rotation (12), lequel est relié solidairement en rotation avec le piston rotatif (8) et lequel est monté rotatif par rapport au boîtier (2) par l'intermédiaire des deux pièces de centrage (56, 57).

3. Système d'entraînement rotatif selon la revendication 2, **caractérisé en ce que** l'arbre de sortie (25) est introduit solidairement en rotation à travers le piston rotatif (8).

4. Système d'entraînement rotatif selon la revendication 2 ou 3, **caractérisé en ce que** l'arbre de sortie (25) est introduit coaxialement à travers les deux pièces de centrage (56, 57).

5. Système d'entraînement rotatif selon l'une des revendications 2 à 4, **caractérisé en ce que** les pièces de centrage (56, 57) sont réalisées en forme de bague.

6. Système d'entraînement rotatif selon l'une des revendications 1 à 5, **caractérisé en ce que** les pièces de centrage (56, 57) comportent une bague extérieure (59) s'engageant sans jeu dans la paire de passages (53, 54) correspondante et une partie intérieure (60) insérée dans la bague extérieure (59) et destinée au montage de l'arbre de sortie (25).

7. Système d'entraînement rotatif selon la revendication 6, **caractérisé en ce que** la bague extérieure (59) est réalisée en métal et la partie intérieure (60) est réalisée en matière plastique.

8. Système d'entraînement rotatif selon l'une des revendications 2 à 7, **caractérisé en ce que** l'arbre de sortie (25) est relié solidairement en rotation avec au moins une pièce de centrage (56), de telle sorte que la totalité ou une partie de la pièce de centrage (56) suit le mouvement de rotation de l'arbre de sortie (25).

9. Système d'entraînement rotatif selon la revendication 8, **caractérisé en ce que** sur la partie de la pièce de centrage (56), reliée solidairement en rotation avec l'arbre de sortie (25), est prévu un bras de butée (75), qui s'avance en saillie radiale en dehors du logement (7) et qui appartient à un dispositif de définition d'angle de rotation (74) pour l'arbre de sortie (25).

10. Système d'entraînement rotatif selon l'une des revendications 1 à 9, **caractérisé en ce que** la calotte (33) est réalisée en matière plastique et le couvercle (34) est réalisé en métal.

11. Système d'entraînement rotatif selon la revendication 10, **caractérisé en ce que** la calotte (33) est emboîtée dans le couvercle (34) et est enserrée par celui-ci de l'extérieur par le haut à la manière d'une pince au moins dans la zone des passages de couvercle (43a, 43b).

12. Système d'entraînement rotatif selon l'une des revendications 1 à 11, **caractérisé en ce que** la calotte (33) et le couvercle (34) se chevauchent uniquement par les parties annulaires entourant le passage (42a, 42b ; 43a, 43b) correspondant.

13. Système d'entraînement rotatif selon la revendication 12, **caractérisé en ce que** le couvercle (34), dans les zones adjacentes aux parties annulaires, est posé contre le bord (55) entourant l'ouverture de calotte (35).

14. Système d'entraînement rotatif selon l'une des revendications 1 à 13, **caractérisé en ce que** les passages de calotte (42a, 42b) et/ou les passages de couvercle (43a, 43) sont réalisés par des saillies (38a, 38b ; 47a, 47b), se chevauchant au moins partiellement, de la calotte (33) et du couvercle (34).

15. Système d'entraînement rotatif selon l'une des revendications 1 à 14, **caractérisé en ce que** le couvercle (34), sur le côté orienté vers la calotte (33), comporte un creux (45), dans lequel le piston rotatif (8) plonge avec une partie de palier (13) en forme de douille.

16. Système d'entraînement rotatif selon l'une des revendications 1 à 15, **caractérisé par** un élément d'étanchéité et de butée combiné (68) d'un seul tenant, comportant une garniture d'étanchéité du boîtier (66), réalisée en forme de cadre et disposée entre le couvercle (34) et la calotte (33), un élément d'étanchéité (16) en appui contre le piston rotatif (8) et deux éléments tampons (73) s'engageant dans le logement (7) pour amortir l'impact du piston rotatif (8).

17. Système d'entraînement rotatif selon l'une des revendications 1 à 16, **caractérisé en ce que** dans le prolongement axial du boîtier (2), en dehors de celui-ci, est prévu un dispositif de définition d'angle de rotation (74) pour l'arbre de sortie (25), lequel comporte un bras de butée (75), relié solidairement en rotation avec l'arbre de sortie (25), et deux éléments de butée (76) solidaires du boîtier, disposés dans la trajectoire de pivotement du bras de butée (75).

18. Système d'entraînement rotatif selon la revendication 17, **caractérisé en ce que** le bras de butée (75) est réalisé en matière plastique, dans laquelle sont insérés des éléments d'impact (79), qui sont réalisés en métal et qui coopèrent avec les éléments de butée (76) solidaires du boîtier.

19. Système d'entraînement rotatif selon la revendication 17 ou 18, **caractérisé par** un cache (83) en forme de calotte pour le dispositif de définition d'angle de rotation (74), lequel est fixé contre le boîtier (2) et est réalisé de préférence dans un matériau transparent.

20. Système d'entraînement rotatif selon la revendication 19, **caractérisé en ce que** le cache (83) est muni de rainures de fixation (86) pour l'ancrage de capteurs (84), qui sont destinés à détecter au moins une position d'angle de rotation de l'arbre de sortie (25).

21. Système d'entraînement rotatif selon l'une des revendications 1 à 20, **caractérisé en ce que** le piston rotatif (8) comporte une partie de palier (13) en forme de douille et une aile (14) en saillie radiale sur la partie de palier (13), l'aile (14) étant disposée dans une partie (64) en forme de segment de cercle du logement (7) définie par la calotte (33).
